# EUROPÄISCHE PATENTANMELDUNG

(11) **EP 3 691 207 A1**
(43) Veröffentlichungstag der Anmeldung: **05.08.2020**
(21) Anmeldenummer: 19154677.9
(22) Anmeldetag: 31.01.2019
(51) Int. Cl.: H04L 12/755, H04L 12/775, G05B 19/418, H04L 12/713, H04L 12/703

(54) **VERFAHREN ZUM BETRIEB EINES KOMMUNIKATIONSSYSTEMS MIT REDUNDANTEN ROUTERN UND ROUTER**

(71) Anmelder: Siemens Aktiengesellschaft, 80333 München (DE)
(72) Erfinder: Keskin, Faruk, 67065 Ludwigshafen am Rhein (DE)

(57) **Zusammenfassung**

Innerhalb eines Kommunikationssystems mit redundanten Routern werden Datagramme von Quell-Kommunikationsgeräten zu Ziel-Kommunikationsgeräten durch Router (101-106) anhand von in Routing-Tabellen der Router gespeicherten Routing-Informationen weitergeleitet. Für Kommunikationsendgeräte (201-203) wird als Default-Gateway jeweils ein virtueller Router konfiguriert, dem eine Gruppe (11, 12) von mehreren Routern zugeordnet ist. Router aus derselben einem virtuellen Router zugeordneten Gruppe wählen untereinander einen als aktives Default-Gateway betriebenen Router (104, 103) aus. Die nicht als aktives Default-Gateway betriebenen Router werden als Reserve-Gateways betrieben. Das jeweilige aktive Default-Gateway übermittelt nur auf eine von einem Reserve-Gateway empfangene Anforderung (1) gespeicherter Adress-Zuordnungen sämtliche gespeicherten Adress-Zuordnungen (2) gebündelt jeweils an ein anforderndes Reserve-Gateway.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie High-availability Seamless Redundancy oder Parallel Redundancy Protocol, für hochverfügbare, redundant betreibbare in industriellen Kommunikationsnetze entwickelt worden. High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jeder Datenrahmen (Frame) von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Datenrahmen aus einem empfangenen Datenstrom ausgefiltert.

Media Redundancy Protocol (MRP) ist im Standard IEC 62439-2 definiert und ermöglicht eine Kompensation einzelner Verbindungsausfälle in Netzwerken mit einfacher Ringtopologie bei stoßbehafteter redundanter Übertragung von Datenrahmen. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluss einleitet. In normalem Betriebszustand prüft der Redundanz-Manager anhand von Test-Datenrahmen, ob innerhalb der Ringtopologie eine Unterbrechung aufgetreten ist. Fällt innerhalb der Ringtopologie ein Switch oder eine Verbindung aus, werden von einem Port ausgesendeten Test-Datenrahmen nicht mehr am jeweils anderen Port empfangen. Anhand dessen kann der Redundanz-Manager einen Ausfall erkennen und leitet bei einem Ausfall Datenrahmen mit Nutzdaten im Unterschied zum normalen Betriebszustand von einem Port an den anderen Port und umgekehrt weiter.

Mittels Common Address Redundancy Protocol (CARP) lassen sich Applikationsserver, Firewalls oder Router als hochverfügbare Systeme realisieren. Hierfür sind zumindest zwei zueinander redundante Systemkomponenten vorgesehen, die identische Aufgaben übernehmen können und demselben Subnetz zugeordnet sind. Die redundanten Systemkomponenten haben jeweils eine eindeutige IP- und MAC-Adresse und bilden einen Geräteverbund. Diesem Geräteverbund wird ebenfalls eine IP- und MAC-Adresse zugeordnet, über die andere Geräte oder Systeme mit dem Geräteverbund kommunizieren. Dabei übernimmt eine Systemkomponente des Geräteverbunds eine Master-Rolle zur Wahrnehmung der Aufgaben des Geräteverbunds, während die übrigen Systemkomponenten eine Slave-Rolle übernehmen. Wenn die Systemkomponente mit der Master-Rolle ausfällt, übernimmt eine Systemkomponente, der bisher eine Slave-Rolle zugeordnet war, dessen Aufgaben und ist über die dem Geräteverbund zugeordnete IP- bzw. MAC-Adresse erreichbar.

Während ein Ausfall einer Teilstrecke innerhalb einer Route durch dynamisches Routing bzw. Auswahl einer Alternativstrecke recht einfach kompensiert werden kann, ist ein Ausfall von in Endgeräten konfigurierten Default-Gateways problematischer. Steht das Default-Gateway nicht als erster Router für die Endgeräte zur Verfügung, ist grundsätzlich kein Routing aus einem betroffenen Subnetz heraus möglich. Mittels Hot Standby Router Protocol (HSRP) werden mehrere Router zu einer Gerätegruppe zusammengefasst, durch die ein logischer Router realisiert wird. Dem logischen Router wird eine IP- und MAC-Adresse zugeordnet, über die ein ausgewählter Primär-Router der Gerätegruppe erreichbar ist. Alle anderen Router stellen Sekundär-Router dar und sind bis auf Weiteres nicht über die dem logischen Router zugeordnete IP- bzw. MAC-Adresse erreichbar. Der Primär-Router signalisiert den Sekundär-Routern seine Funktionsbereitschaft mittels einer standardmäßig alle 3 Sekunden gesendeten Multicast-Nachrichten. Bleiben diese Multicast-Nachrichten über einen längeren Zeitraum, z.B. 10 Sekunden aus, wird ein bisheriger Sekundär-Router als neuer Primär-Router ausgewählt und bindet die dem logischen Router zugeordnete IP- bzw. MAC-Adresse an seine Netzwerkschnittstelle.

Probleme durch einen Ausfall eines Default-Gateways bzw. eines ersten Routers für Endgeräte können auch mittels Virtual Router Redundancy Protocol (VRRP) gelöst werden. Im Unterschied zu HSRP bietet VRRP keine IPv6-Unterstützung, ermöglicht aber eine Verwendung einer IP-Adresse eines physikalisch vorhandenen Routers als IP-Adresse eines durch eine Gerätegruppe realisierten logischen Routers.

Aus EP 2 127 329 A1 ist ein Verfahren zur Filterung redundanter Datenrahmen in einem Netzknoten mit zumindest zwei Ports beschrieben, die jeweils eine Sende- und eine Empfangseinrichtung umfassen. Die Datenrahmen weisen jeweils zumindest eine MAC-Quelladresse, eine Datenrahmen-ID sowie einen CRC-Wert auf. Die Sendeeinrichtungen weisen jeweils eine Sendeliste auf, in der zu sendende Datenrahmen gespeichert werden. Die Empfangseinrichtungen weisen jeweils einen Empfangsspeicher zum Speichern von empfangenen Datenrahmen auf. Zur Filterung von redundanten Datenrahmen in einem Netzknoten eines Kommunikationsnetzes wird vorgeschlagen, dass bei Empfang eines ersten Datenrahmens an einem der Ports unter Verwendung der im ersten Datenrahmen angegebenen MAC-Quelladresse und der Datenrahmen-ID des ersten Datenrahmens in der Sendeliste nach einem zweiten Datenrahmen mit identischer MAC-Quelladresse und Datenrahmen-ID gesucht wird. Falls ein solcher zweiter Datenrahmen vorhanden ist, wird der ersten Datenrahmen verworfen.

In US 9 191 271 B2 ist ein Verfahren für einen beschleunigten VRRP-Wiederherstellungsprozess beschrieben, bei dem ein ARP-Cache (Address Resolution Protocol) eines VRRP-Master-Router und mit ARP-Caches von VRRP-Backup-Routern synchronisiert wird. Ein bisheriger VRRP-Backup-Router muss damit nach einer Umschaltung als neuer VRRP-Master-Router keine Zuordnungen zwischen MAC-Adressen und IP-Adresse neu lernen, sondern kann die Zuordnungen aus dem ARP-Cache des bisherigen VRRP-Master-Router verwenden. Bei einem neuen Eintrag in seinem ARP-Cache überprüft jeder VRRP-Router jeweils, ob er als VRRP-Master-Router konfiguriert ist. Falls dies der Fall ist, sendet er den neuen Eintrag an die VRRP-Backup-Router. Somit werden die ARP-Caches inkrementell zwischen dem VRRP-Master-Router und den VRRP-Backup-Router. Dies verursacht einen nachteilig starken Nachrichtenverkehr mit jeweils wenigen Nutzdaten.

Der vorliegenden Erfindung liegt die Aufgabe zugrunde, ein effizientes Verfahren zum Betrieb eines Kommunikationssystems mit redundanten Routern zu schaffen, das bei einem Ausfall eines als aktives Default-Gateway betriebenen Routers einen möglichst nahtlosen Weiterbetrieb des Kommunikationssystems ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch einen Router mit den in Anspruch 11 angegebenen Merkmalen angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikationssystems mit redundanten Routern werden Datagramme innerhalb des Kommunikationssystems von Quell-Kommunikationsgeräten zu Ziel-Kommunikationsgeräten durch Router anhand von in Routing-Tabellen der Router gespeicherten Routing-Informationen weitergeleitet. Für Kommunikationsendgeräte wird als Default-Gateway jeweils ein virtueller Router konfiguriert, dem eine Gruppe von mehreren Routern zugeordnet ist. Durch ein Default-Gateway wird beispielsweise sämtlicher nicht für ein jeweiliges Subnetz bestimmter Nachrichtenverkehr in ein anderes Subnetz weitergeleitet. Router aus derselben einem virtuellen Router zugeordneten Gruppe wählen untereinander einen als aktives Default-Gateway betriebenen Router aus, wobei die nicht als aktives Default-Gateway betriebenen Router als Reserve-Gateways betrieben werden. Insbesondere können die Router aus derselben einem virtuellen Router zugeordneten Gruppe untereinander den als aktives Default-Gateway betriebenen Router gemäß Common Address Redundancy Protocol, Virtual Router Redundancy Protocol oder Hot Standby Router Protocol auswählen.

Die Reserve-Gateways fordern erfindungsgemäß vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte an. Die Adress-Zuordnungen zwischen Sicherungsschicht-Adressen und Vermittlungsschicht-Adressen werden vorzugsweise gemäß Adress Resolution Protocol oder Neighbor Discovery Protocol ermittelt und verwendet.

Das jeweilige aktive Default-Gateway übermittelt erfindungsgemäß nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway. Bei einem Ausfall eines zuvor aktiven Default-Gateway wählen die Reserve-Gateways untereinander einen neues aktives Default-Gateway aus. Das neue aktive Default-Gateway übernimmt die vor dem Ausfall übermittelten Adress-Zuordnungen für seinen Betrieb als aktives Default-Gateway. Vorteilhafterweise erfolgt ein Umschalten von einem ausgefallenen, zuvor aktiven Default-Gateway auf ein neues aktives Default-Gateway ohne zusätzlichen Anlernvorgang für Adress-Zuordnungen durch das neue aktive Default-Gateway unmittelbar auf Grundlage der vor dem Ausfall übermittelten Adress-Zuordnungen. Dies ermöglicht ein schnelles Umschalten, ohne unnötig häufigen Nachrichtenverkehr zur Adress-Synchronisierung zwischen dem aktiven Default-Gateway und den Reserve-Gateways zu verursachen.

Vorzugsweise werden die Anforderungen gespeicherter Adress-Zuordnungen durch die Reserve-Gateways jeweils als Unicast-Nachrichten an das aktive Default-Gateway übermittelt. In entsprechender Weise werden dem die gespeicherten Adress-Zuordnungen vorteilhafterweise durch das jeweilige aktive Default-Gateway jeweils als Unicast-Nachrichten an die anfordernden Reserve-Gateways übermittelt. Entsprechend einer weiteren bevorzugten Ausgestaltung der vorliegenden Erfindung werden die Adress-Zuordnungen als Type-Length-Value-Datenobjekte in einem Nutzdatenbereich von Nachrichten bereitgestellt, die durch das jeweilige aktive Default-Gateway an Adress-Zuordnungen anfordernde Reserve-Gateways übermittelt werden. Dies vereinfacht eine Verifizierung von zwischen dem aktiven Default-Gateway und den Reserve-Gateways synchronisierten Adress-Zuordnungen.

Entsprechend einer weiteren bevorzugten Ausgestaltung der vorliegenden Erfindung tauschen die Router aus derselben einem virtuellen Router zugeordneten Gruppe untereinander Informationen über ihren jeweiligen Betriebszustand aus und überwachen das aktive Default-Gateway anhand dieser Informationen auf einen Ausfall. Vorteilhafterweise übermittelt das jeweilige aktive Default-Gateway zusätzlich zu den gespeicherten Adress-Zuordnungen auf eine von einem Reserve-Gateway empfangene Anforderung jeweils Informationen über eingerichtete statische Routen an das anfordernde Reserve-Gateway. Insbesondere kann das neue aktive Default-Gateway statische Routen entsprechend den vor dem Ausfall übermittelten Informationen über statische Routen einrichten.

Die Reserve-Gateways fordern die Übermittlung der Adress-Zuordnungen vorzugsweise erst nach Ablauf einer vorgegebenen Zeitdauer ab Auswahl des aktiven Default-Gateway von diesem an. Entsprechend einer weiteren bevorzugten Ausgestaltung der vorliegenden Erfindung übermittelt das jeweilige aktive Default-Gateway periodisch Aktualisierungen sämtlicher gespeicherten Adress-Zuordnungen gebündelt an die anfordernden Reserve-Gateways.

Der erfindungsgemäße Router ist zur Durchführung eines Verfahrens entsprechend vorangehenden Ausführungen vorgesehen und weist mehrere Anschlüssen zur Verbindung mit jeweils einem Kommunikationsgerät sowie eine Speichereinrichtung zur Speicherung von Routing-Informationen in Routing-Tabellen auf. Der Router ist dafür ausgestaltet und eingerichtet, Datagramme von Quell-Kommunikationsgeräten zu Ziel-Kommunikationsgeräten Router anhand von Routing-Informationen weiterzuleiten und aus einer Gruppe von mehreren Routern, die einem virtuellen Router zugeordnet ist, gemeinsam mit diesen Routern einen als aktives Default-Gateway betriebenen Router auszuwählen, wobei die nicht als aktives Default-Gateway betriebenen Router als Reserve-Gateways betrieben werden.

Erfindungsgemäß ist der Router dafür ausgestaltet und eingerichtet, als Reserve-Gateway vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anzufordern und als aktives Default-Gateway nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway zu übermitteln. Darüber hinaus ist der dafür ausgestaltet und eingerichtet, bei einem Ausfall eines zuvor aktiven Default-Gateway gemeinsam mit anderen Reserve-Gateways einen neues aktives Default-Gateway auszuwählen und als neues aktive Default-Gateway die vor dem Ausfall übermittelten Adress-Zuordnungen für seinen Betrieb als aktives Default-Gateway zu übernehmen.

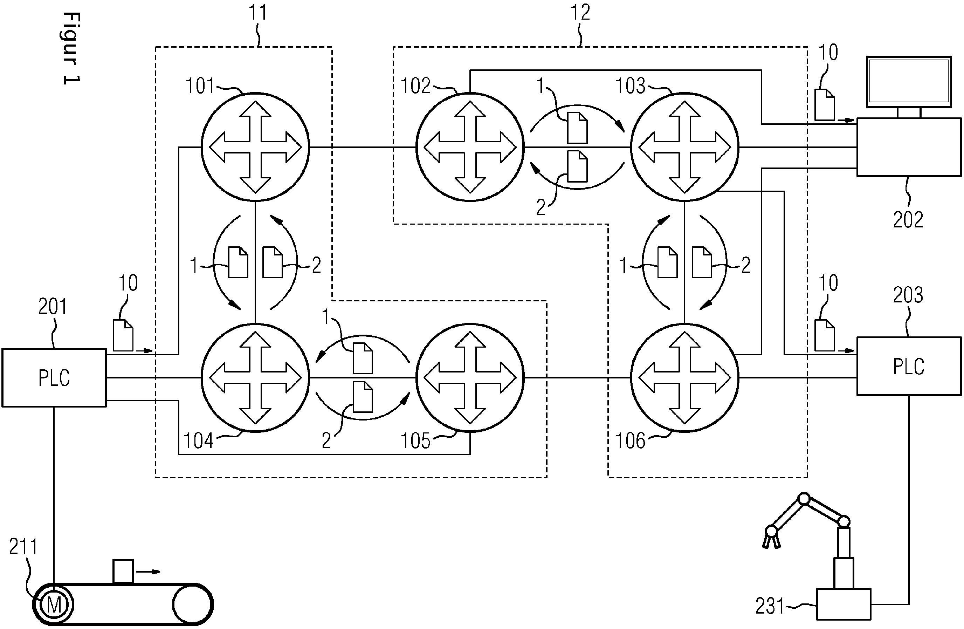

Die vorliegende Erfindung wird nachfolgend an einem Ausführungsbeispiel anhand der Zeichnung näher erläutert. Es zeigt die
- Figur: ein mehrere Kommunikationsgeräte umfassendes Kommunikationssystem für ein industrielles Automatisierungssystem,

Das in der Figur dargestellte Kommunikationssystem für ein industrielles Automatisierungssystem umfasst mehrere Router oder Gateways 101-106 als Datagramme weiterleitende Kommunikationsgeräte. Router bzw. Gateway können eine integrierte Firewall umfassen dienen insbesondere zum Anschluss von speicherprogrammierbaren Steuerungen 201, 203 oder Bedien- und Beobachtungsstationen 202, die ebenfalls Kommunikationsgeräte bzw. Kommunikationsendgeräte darstellen.

Speicherprogrammierbare Steuerungen 201, 203 umfassen typischerweise jeweils ein Kommunikationsmodul, eine Zentraleinheit sowie zumindest eine Eingabe/Ausgabe-Einheit dar. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201, 203 mit einem Switch oder Router oder zusätzlich mit einem Feldbus verbunden werden. Die Eingabe/AusgabeEinheit dient einem Austausch von Steuerungs- und Messgrößen zwischen der speicherprogrammierbaren Steuerung 201, 203 und einer durch die speicherprogrammierbare Steuerung 201, 203 gesteuerten Maschine oder Vorrichtung 211, 231. Die Zentraleinheit ist insbesondere für eine Ermittlung geeigneter Steuerungsgrößen aus erfassten Messgrößen vorgesehen. Obige Komponenten der speicherprogrammierbaren Steuerung 201, 203 sind beispielsweise über ein Rückwandbus-System miteinander verbunden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Durch die Router 101-106 werden Datagramme 10 von Quell-Kommunikationsgeräten zu Ziel-Kommunikationsgeräten anhand von in Routing-Tabellen der Router gespeicherten Routing-Informationen weitergeleitet. Je nach übermittelten Informationen können die speicherprogrammierbaren Steuerungen 201, 203 bzw. die Bedien- und Beobachtungsstation 202 einerseits Quell-Kommunikationsgeräte und andererseits Ziel-Kommunikationsgeräte sein und somit beide Rollen vereinen. Im vorliegenden Ausführungsbeispiel stellen die speicherprogrammierbaren Steuerungen 201, 203 und die Bedien- und Beobachtungsstation 202 Kommunikationsendgeräte dar, für die als Default-Gateway jeweils ein virtueller Router konfiguriert wird, dem eine Gruppe 11, 12 von mehreren Routern 101, 104-105, 102-103, 106 zugeordnet ist.

Router 101, 104-105, 102-103, 106 aus derselben einem virtuellen Router zugeordneten Gruppe 11, 12 wählen untereinander einen als aktives Default-Gateway betriebenen Router aus. Dabei werden die nicht als aktives Default-Gateway betriebenen Router als Reserve-Gateways betrieben. Beispielsweise wählen die Router 101, 104-105, 102-103, 106 aus derselben einem virtuellen Router zugeordneten Gruppe 11, 12 untereinander den als aktives Default-Gateway betriebenen Router gemäß Common Address Redundancy Protocol (CARP), Virtual Router Redundancy Protocol (VRRP) oder Hot Standby Router Protocol (HSRP) aus. Darüber hinaus tauschen die Router 101, 104-105, 102-103, 106 aus derselben einem virtuellen Router zugeordneten Gruppe 11, 12 untereinander Informationen über ihren jeweiligen Betriebszustand aus und überwachen das aktive Default-Gateway anhand dieser Informationen auf einen Ausfall. Im vorliegenden Ausführungsbeispiel wird von einem Szenario ausgegangen, bei dem die Router 104 und 103 als Default-Gateways betrieben werden.

Die Reserve-Gateways 101, 105, 102, 106 fordern vom jeweiligen aktiven Default-Gateway 104, 103 eine Übermittlung gespeicherter Adress-Zuordnungen zwischen MAC-Adressen und IP-Adressen erfasster Kommunikationsgeräte an und übermitteln hierzu entsprechende Anforderungen 1. Die Adress-Zuordnungen zwischen MAC-Adressen und IP-Adressen werden beispielsweise gemäß Adress Resolution Protocol (ARP) oder Neighbor Discovery Protocol (NDP) ermittelt und verwendet. Vorzugsweise fordern die Reserve-Gateways 101, 105, 102, 106 die Übermittlung der Adress-Zuordnungen, insbesondere im Sinn einer Initial Network Convergence, erst nach Ablauf einer vorgegebenen Zeitdauer ab Auswahl des aktiven Default-Gateway 104, 103 von diesem an.

Das jeweilige aktive Default-Gateway 104, 103 übermittelt nur auf eine von einem Reserve-Gateway 101, 105, 102, 106 empfangene Anforderung 1 gespeicherter Adress-Zuordnungen sämtliche gespeicherten Adress-Zuordnungen 2 gebündelt jeweils an ein anforderndes Reserve-Gateway. Vorzugsweise übermittelt das jeweilige aktive Default-Gateway 104, 103 zusätzlich zu den gespeicherten Adress-Zuordnungen 2 auf eine von einem Reserve-Gateway 101, 105, 102, 106 empfangene Anforderung 1 jeweils Informationen über eingerichtete statische Routen an das anfordernde Reserve-Gateway. Darüber hinaus übermittelt das jeweilige aktive Default-Gateway 104, 103 nach einer erstmaligen Anforderung periodisch Aktualisierungen sämtlicher gespeicherten Adress-Zuordnungen 2 gebündelt an die anfordernden Reserve-Gateways.

Bei einer besonders bevorzugten Ausführungsform werden die Anforderungen 1 gespeicherter Adress-Zuordnungen durch die Reserve-Gateways 101, 105, 102, 106 jeweils als Unicast-Nachrichten an das aktive Default-Gateway 104, 103 übermittelt. Dementsprechend werden auch die gespeicherten Adress-Zuordnungen 2 durch das jeweilige aktive Default-Gateway 104, 103 jeweils als Unicast-Nachrichten an die anfordernden Reserve-Gateways übermittelt. Außerdem werden die Adress-Zuordnungen als Type-Length-Value-Datenobjekte in einem Nutzdatenbereich von Nachrichten 2 bereitgestellt werden, die durch das jeweilige aktive Default-Gateway 104, 103 an Adress-Zuordnungen anfordernde Reserve-Gateways übermittelt werden.

Bei einem Ausfall eines zuvor aktiven Default-Gateway 104, 103 wählen die Reserve-Gateways 101, 105, 102, 106 untereinander einen neues aktives Default-Gateway auswählen. Beispielsweise können der Router 101 bzw. 106 als neues aktives Default-Gateway ausgewählt werden. Das neue aktive Default-Gateway 101, 106 übernimmt die vor dem Ausfall übermittelten Adress-Zuordnungen 2 für seinen Betrieb als aktives Default-Gateway und richtet ggf. statische Routen entsprechend den vor dem Ausfall übermittelten Informationen über statische Routen ein. Insbesondere erfolgt ein Umschalten von einem ausgefallenen, zuvor aktiven Default-Gateway 104, 103 auf ein neues aktives Default-Gateway 101, 106 im vorliegenden Ausführungsbeispiel ohne zusätzlichen Anlernvorgang für Adress-Zuordnungen durch das neue aktive Default-Gateway, sondern unmittelbar auf Grundlage der vor dem Ausfall übermittelten Adress-Zuordnungen.

## Patentansprüche

1. Verfahren zum Betrieb eines Kommunikationssystems mit redundanten Routern, bei dem
- Datagramme (10) innerhalb des Kommunikationssystems von Quell-Kommunikationsgeräten zu Ziel-Kommunikationsgeräten durch Router (101-106) anhand von in Routing-Tabellen der Router gespeicherten Routing-Informationen weitergeleitet werden,
- für Kommunikationsendgeräte (201-203) als Default-Gateway jeweils ein virtueller Router konfiguriert wird, dem eine Gruppe (11, 12) von mehreren Routern zugeordnet ist,
- Router aus derselben einem virtuellen Router zugeordneten Gruppe untereinander einen als aktives Default-Gateway betriebenen Router (104, 103) auswählen, wobei die nicht als aktives Default-Gateway betriebenen Router als Reserve-Gateways betrieben werden,
- die Reserve-Gateways vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anfordern,
- das jeweilige aktive Default-Gateway (104, 103) nur auf eine von einem Reserve-Gateway empfangene Anforderung (1) gespeicherter Adress-Zuordnungen sämtliche gespeicherten Adress-Zuordnungen (2) gebündelt jeweils an ein anforderndes Reserve-Gateway übermittelt,
- die Reserve-Gateways bei einem Ausfall eines zuvor aktiven Default-Gateway untereinander einen neues aktives Default-Gateway auswählen,
- das neue aktive Default-Gateway die vor dem Ausfall übermittelten Adress-Zuordnungen für seinen Betrieb als aktives Default-Gateway übernimmt.

2. Verfahren nach Anspruch 1,
bei dem ein Umschalten von einem ausgefallenen, zuvor aktiven Default-Gateway auf ein neues aktives Default-Gateway ohne zusätzlichen Anlernvorgang für Adress-Zuordnungen durch das neue aktive Default-Gateway unmittelbar auf Grundlage der vor dem Ausfall übermittelten Adress-Zuordnungen erfolgt.

3. Verfahren nach einem der Ansprüche 1 oder 2,
bei dem die Router aus derselben einem virtuellen Router zugeordneten Gruppe untereinander Informationen über ihren jeweiligen Betriebszustand austauschen und das aktive Default-Gateway anhand dieser Informationen auf einen Ausfall überwachen.

4. Verfahren nach einem der Ansprüche 1 bis 3,
bei dem das jeweilige aktive Default-Gateway zusätzlich zu den gespeicherten Adress-Zuordnungen auf eine von einem Reserve-Gateway empfangene Anforderung jeweils Informationen über eingerichtete statische Routen an das anfordernde Reserve-Gateway übermittelt.

5. Verfahren nach Anspruch 4,
bei dem das neue aktive Default-Gateway statische Routen entsprechend den vor dem Ausfall übermittelten Informationen über statische Routen einrichtet.

6. Verfahren nach einem der Ansprüche 1 bis 5,
bei dem die Reserve-Gateways die Übermittlung der Adress-Zuordnungen erst nach Ablauf einer vorgegebenen Zeitdauer ab Auswahl des aktiven Default-Gateway von diesem anfordern.

7. Verfahren nach einem der Ansprüche 1 bis 6,
bei dem die Adress-Zuordnungen zwischen Sicherungsschicht-Adressen und Vermittlungsschicht-Adressen gemäß Adress Resolution Protocol oder Neighbor Discovery Protocol ermittelt und verwendet werden.

8. Verfahren nach einem der Ansprüche 1 bis 7,
bei dem das jeweilige aktive Default-Gateway periodisch Aktualisierungen sämtlicher gespeicherten Adress-Zuordnungen gebündelt an die anfordernden Reserve-Gateways übermittelt.

9. Verfahren nach einem der Ansprüche 1 bis 8,
bei dem die Anforderungen gespeicherter Adress-Zuordnungen durch die Reserve-Gateways jeweils als Unicast-Nachrichten an das aktive Default-Gateway übermittelt werden und bei dem die gespeicherten Adress-Zuordnungen durch das jeweilige aktive Default-Gateway jeweils als Unicast-Nachrichten an die anfordernden Reserve-Gateways übermittelt werden.

10. Verfahren nach einem der Ansprüche 1 bis 9,
bei dem die Adress-Zuordnungen als Type-Length-Value-Datenobjekte in einem Nutzdatenbereich von Nachrichten bereitgestellt werden, die durch das jeweilige aktive Default-Gateway an Adress-Zuordnungen anfordernde Reserve-Gateways übermittelt werden.

11. Verfahren nach einem der Ansprüche 1 bis 10,
bei dem die Router aus derselben einem virtuellen Router zugeordneten Gruppe untereinander den als aktives Default-Gateway betriebenen Router gemäß Common Address Redundancy Protocol, Virtual Router Redundancy Protocol oder Hot Standby Router Protocol auswählen.

12. Router zur Durchführung eines Verfahrens nach einem der Ansprüche 1 bis 11 mit
- mehreren Anschlüssen zur Verbindung mit jeweils einem Kommunikationsgerät,
- einer Speichereinrichtung zur Speicherung von Routing-Informationen in Routing-Tabellen,
wobei der Router dafür ausgestaltet und eingerichtet ist,
- Datagramme von Quell-Kommunikationsgeräten zu Ziel-Kommunikationsgeräten Router anhand von Routing-Informationen weiterzuleiten,
- aus einer Gruppe von mehreren Routern, die einem virtuellen Router zugeordnet ist, gemeinsam mit diesen Routern einen als aktives Default-Gateway betriebenen Router auszuwählen, wobei die nicht als aktives Default-Gateway betriebenen Router als Reserve-Gateways betrieben werden,
- als Reserve-Gateway vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anzufordern,
- als aktives Default-Gateway nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway zu übermitteln,
- bei einem Ausfall eines zuvor aktiven Default-Gateway gemeinsam mit anderen Reserve-Gateways einen neues aktives Default-Gateway auszuwählen und
- als neues aktive Default-Gateway die vor dem Ausfall übermittelten Adress-Zuordnungen für seinen Betrieb als aktives Default-Gateway zu übernehmen.
